# EUROPEAN PATENT APPLICATION

(11) **EP 4 489 196 A1**
(43) Date of publication of application: **08.01.2025**
(21) Application number: 24177125.2
(22) Date of filing: 21.05.2024
(51) Int. Cl.: H01M 50/209, H01M 50/244, H01M 50/249, H01M 50/258, H01M 50/289, H01M 50/507, B60L 50/64

(54) **BATTERY PACK**

(30) Priority: 04.07.2023 JP 2023110146
(71) Applicant: Prime Planet Energy & Solutions, Inc., Chuo-ku Tokyo 103-0022 (JP)
(72) Inventor: INAMURA, Takashi, Tokyo, 103-0022 (JP)
(74) Representative: Kuhnen & Wacker Patent- und Rechtsanwaltsbüro PartG mbB

(57) **Abstract**

At least one of a first bus bar module (30A) and a second bus bar module (30B) has a protrusion (330A, 330B, 340A, 340B) that protrudes toward the other of the first bus bar module (30A) and the second bus bar module (30B), the protrusion (330A, 330B, 340A, 340B) hindering incorrect assembling of the first bus bar module (30A) or the second bus bar module (30B) by interference, the protrusion (330A, 330B, 340A, 340B) causing no interference when the first bus bar module (30A) and the second bus bar module (30B) are correctly assembled.

## Description

### CROSS REFERENCE TO RELATED APPLICATIONS

This nonprovisional application is based on Japanese Patent Application No. 2023-110146 filed on July 4, 2023 with the Japan Patent Office, the entire contents of which are hereby incorporated by reference.

### BACKGROUND OF THE INVENTION

### Field of the Invention

The present technology relates to a battery pack.

### Description of the Background Art

The specification of Chinese Utility Model No. 217468616 indicates a Cell-to-Pack structure in which a stack including a plurality of battery cells is directly accommodated in a case without using end plates and binding bars (module structure) that restrain the plurality of battery cells.

### SUMMARY OF THE INVENTION

In the case of the Cell-to-Pack structure, when mounting, on a stack of a plurality of battery cells, a bus bar module formed into a module by accommodating a plurality of bus bars in a plate member, the bus bar module is installed after the stack of the battery cells is accommodated in a case, which may lead to incorrect assembling of the bus bar module in terms of a type or installation direction of the bus bar module.

It is an object of the present technology to provide a battery pack to prevent incorrect assembling of a bus bar module also in the Cell-to-Pack structure.

The present technology provides the following battery pack.
[1] A battery pack comprising: a first stack including a plurality of first battery cells arranged side by side in a first direction; a second stack that is adjacent to the first stack in a second direction orthogonal to the first direction and that includes a plurality of second battery cells arranged side by side in the first direction; a case that has a side wall supporting the first stack and the second stack in the first direction and that accommodates the first stack and the second stack; a first bus bar module including a first bus bar that electrically connects the plurality of first battery cells and a first plate member that accommodates the first bus bar, the first bus bar module being disposed on the first stack; and a second bus bar module including a second bus bar that electrically connects the plurality of second battery cells and a second plate member that accommodates the second bus bar, the second bus bar module being disposed on the second stack, wherein at least one of the first bus bar module and the second bus bar module has a protrusion that protrudes toward the other of the first bus bar module and the second bus bar module, the protrusion hindering incorrect assembling of the first bus bar module or the second bus bar module by interference, the protrusion causing no interference when the first bus bar module and the second bus bar module are correctly assembled.
[2] The battery pack according to [1], wherein the protrusion includes a positioning mechanism that is inserted between the first stack and the second stack and that positions the first bus bar module or the second bus bar module in the second direction.
[3] The battery pack according to [2], wherein the positioning mechanism is press-fitted between the first stack and the second stack.
[4] The battery pack according to [2] or [3], wherein the protrusion includes a first protrusion constituting the positioning mechanism and a second protrusion formed separately from the first protrusion.
[5] The battery pack according to any one of [1] to [4], wherein each of the first plate member and the second plate member has a second positioning mechanism that positions a corresponding one of the first bus bar module and the second bus bar module in the first direction by biasing the side wall of the case.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view of a battery pack.
Fig. 2 is a perspective view of a battery cell.
Fig. 3 is a top view of a plate member of a bus bar module.
Fig. 4 is a perspective view showing a structure around a bus bar.
Fig. 5 is a diagram showing a positioning mechanism of the bus bar module in the Y axis direction.
Fig. 6 is a perspective view showing a structure between the bus bar module and an upper surface of the battery cell.
Fig. 7 is a perspective view showing a rear surface of the plate member of the bus bar module.
Fig. 8 is a diagram showing the positioning mechanism of the bus bar module in the X axis direction.
Fig. 9 is a diagram for illustrating an incorrect assembling prevention mechanism of the bus bar module.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the "battery pack" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

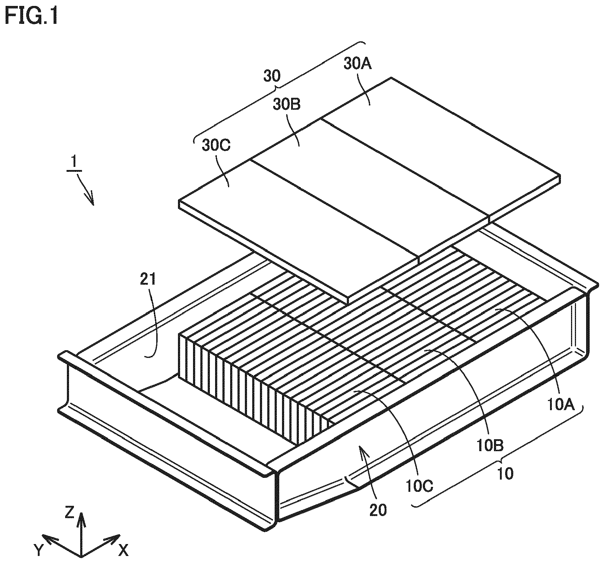

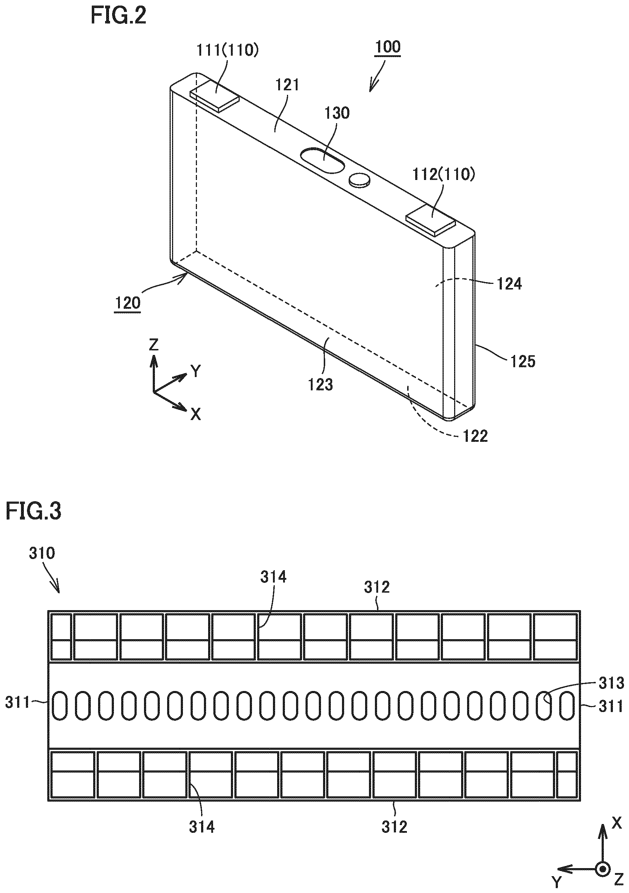

Fig. 1 is an exploded perspective view of a battery pack 1. As shown in Fig. 1, battery pack 1 includes: stacks 10 each including a plurality of battery cells 100 (see Fig. 2) arranged side by side in the Y axis direction (first direction); a case 20 that accommodates stacks 10; and bus bar modules 30 disposed on stacks 10.

Stacks 10 include a stack 10A (first stack), a stack 10B (second stack), and a stack 10C (third stack). Stacks 10A, 10B are adjacent to each other in the X axis direction (second direction). Stacks 10B, 10C are adjacent to each other in the X axis direction.

Case 20 has side walls 21 facing stacks 10A, 10B, 10C in the Y axis direction. Side walls 21 directly support stacks 10A, 10B, 10C from both sides in the Y axis direction. Thus, battery pack 1 according to the present embodiment employs a Cell-to-Pack structure in which stacks 10 each including the plurality of battery cells 100 are directly stored in the case.

Bus bar modules 30 include: a bus bar module 30A (first bus bar module) disposed on stack 10A; a bus bar module 30B (second bus bar module) disposed on stack 10B; and a bus bar module 30C (third bus bar module) disposed on stack 10C.

Fig. 2 is a perspective view showing a configuration of a battery cell 100 included in each of stacks 10A, 10B, 10C. As shown in Fig. 2, battery cell 100 has a prismatic shape. Battery cell 100 has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along an X axis direction (second direction) orthogonal to a Y axis direction (first direction). Positive electrode terminal 111 and negative electrode terminal 112 are provided to be separated from each other in the X axis direction.

Housing 120 has a substantially rectangular parallelepiped shape. An electrode assembly (not shown) and an electrolyte solution (not shown) are accommodated in housing 120. Housing 120 includes an upper surface 121, a lower surface 122, a first side surface 123, a second side surface 124, and a third side surface 125.

Upper surface 121 is a flat surface orthogonal to the Z axis direction. Electrode terminals 110 are disposed on upper surface 121. Lower surface 122 faces upper surface 121 along the Z axis direction (third direction) orthogonal to the Y axis direction (first direction) and the X axis direction (second direction).

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of battery cells 100 are stacked such that first side surfaces 123 of battery cells 100, 100 adjacent to each other in the Y axis direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When internal pressure of housing 120 becomes more than or equal to a predetermined value due to gas generated inside housing 120, gas-discharge valve 130 is opened to discharge the gas to the outside of housing 120.

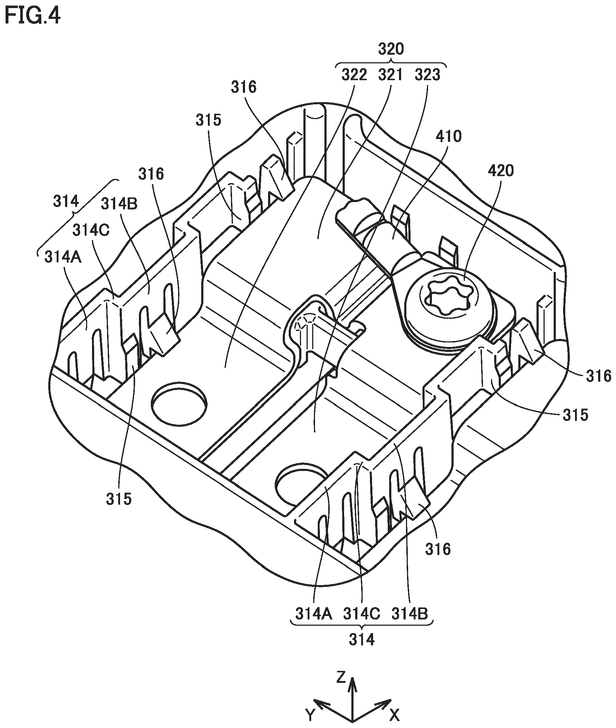

Next, a basic configuration of each bus bar module 30 will be described with reference to Figs. 3 and 4. Fig. 3 is a top view of a plate member 310 included in bus bar module 30. Fig. 4 is a perspective view showing a structure around a bus bar 320 in bus bar module 30.

Each of bus bar modules 30A, 30B, 30C includes plate member 310 shown in Fig. 3. As shown in Fig. 3, plate member 310 includes: end surfaces 311 located at end portions in the Y axis direction; end surfaces 312 located at end portions in the X axis direction; through holes 313 formed at positions corresponding to gas-discharge valves 130 of battery cells 100; and wall portions 314 that partition a space on plate member 310 into a plurality of spaces.

As shown in Fig. 4, bus bar 320 is accommodated in each space partitioned by wall portion 314. Bus bar 320 is composed of a conductor (typically, a metal member). Bus bar 320 electrically connects electrode terminals 110 of the plurality of battery cells 100 to each other. Bus bar 320 includes: a root portion 321 extending in the Y axis direction; and a connection portion 322 (first connection portion) and a connection portion 323 (second connection portion) each protruding from root portion 321 in the X axis direction. Connection portions 322, 323 are each connected to electrode terminals 110 of two adjacent battery cells 100 in the Y axis direction.

Wall portion 314 of plate member 310 includes a first portion 314A, a second portion 314B, and a third portion 314C. First portion 314A and second portion 314B are formed to extend in the X axis direction. First portion 314A and second portion 314B are located at positions separated from each other in the Y axis direction. Third portion 314C connects first portion 314A and second portion 314B.

Ribs 315 and locks 316 are formed in wall portion 314. Ribs 315 protrude from positions adjacent to third portion 314C of wall portion 314 to both sides in the Y axis direction. Ribs 315 position the plurality of adjacent bus bars 320 in the Y axis direction. Locks 316 lock bus bars 320 in the Z axis direction. The shapes and arrangements of ribs 315 and locks 316 are not limited to those shown in Fig. 4, and can be appropriately changed.

Bus bar 320 is connected to a wiring 410. Wiring 410 is fixed to bus bar 320 by a screw 420. The implementations of wiring 410 and screw 420 are not limited to those shown in Fig. 4, and the wiring may be constituted of, for example, a flexible wiring board.

Electrode terminal 110 of battery cell 100 and bus bar 320 are positioned relative to each other in the X axis direction and the Y axis direction and are then welded and joined to each other. By precisely performing this positioning, the step of welding electrode terminal 110 and bus bar 320 can be performed in a highly efficient and high-quality manner. When accommodating bus bar 320 in the space partitioned by wall portion 314, bus bar 320 is precisely positioned with respect to plate member 310 in the X axis direction and the Y axis direction. Therefore, plate member 310 and stack 10 are required to be positioned precisely.

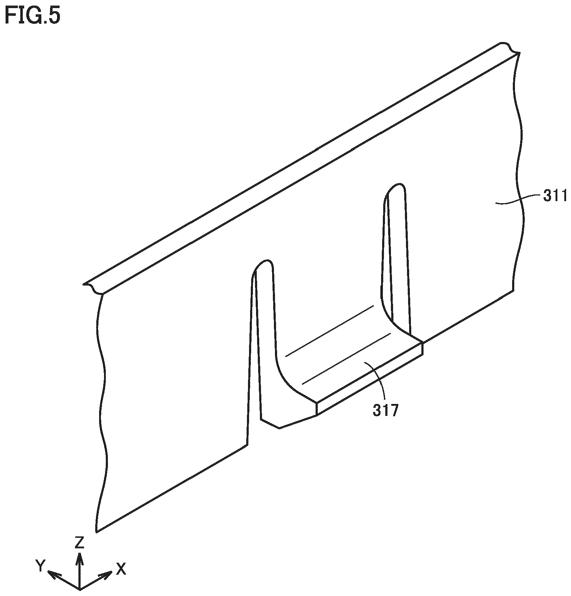

A positioning mechanism of bus bar module 30 (plate member 310) according to the present embodiment will be described with reference to Figs. 5 to 8.

Fig. 5 is a diagram showing the positioning mechanism of bus bar module 30 in the Y axis direction. As shown in Fig. 5, plate member 310 of bus bar module 30 has a positioning mechanism 317 that positions bus bar module 30 in the Y axis direction by biasing side wall 21 of case 20.

Positioning mechanism 317 shown in Fig. 5 is constituted of a protuberance having a snap-fit shape and formed at end surface 311 of plate member 310. The protuberance constituting positioning mechanism 317 protrudes from end surface 311 of plate member 310 to the side wall 21 side. When installing plate member 310 in case 20, positioning mechanism 317 presses side wall 21 of case 20 to bias plate member 310 toward a predetermined position. As a result, bus bar module 30 is positioned in the Y axis direction.

Positioning mechanism 317 may be provided at each of end surfaces 311 of plate member 310 on the both sides in the Y axis direction, or may be provided only at end surface 311 of plate member 310 on one side in the Y axis direction. When positioning mechanisms 317 are provided on the both sides in the Y axis direction, plate member 310 is biased toward the center of case 20 in the Y axis direction, and is positioned at a position at which biasing forces by positioning mechanisms 317 on the both sides are balanced. When positioning mechanism 317 is provided on one side in the Y axis direction, plate member 310 is biased toward side wall 21 opposite to the side on which positioning mechanism 317 is provided, and is positioned with side wall 21 serving as a reference plane.

The protuberance constituting positioning mechanism 317 is deformed toward the central side of stack 10 as a reaction to the pressing of side wall 21 of case 20. On this occasion, positioning mechanism 317 is preferably located at a position so as not to interfere with gas-discharge valve 130 when viewed in the Z axis direction. In this way, bus bar module 30 can be positioned in the Y axis direction without affecting discharging of the gas from gas-discharge valve 130 of battery cell 100 located at the end portion in the Y axis direction.

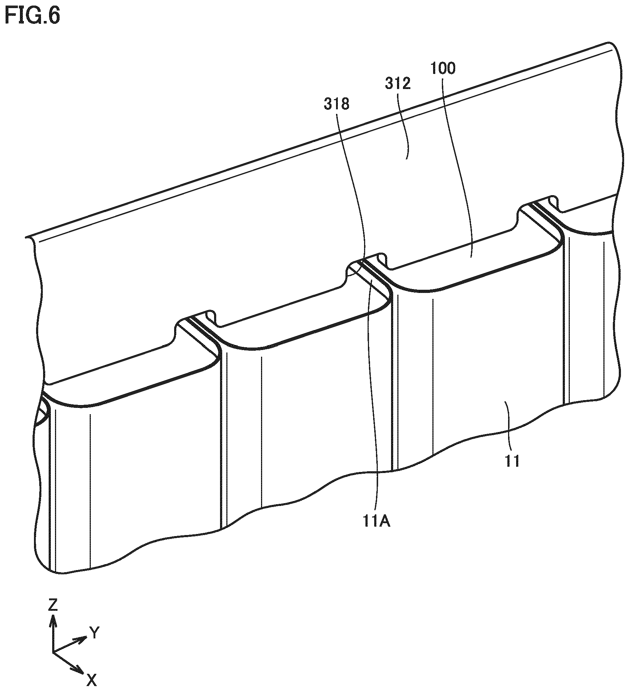

Fig. 6 is a perspective view showing a structure between bus bar module 30 and upper surface 121 of battery cell 100.

As shown in Fig. 6, stack 10 includes a separator 11 provided between the plurality of battery cells 100. Separator 11 may be a film or tape that covers first side surface 123, second side surface 124, and third side surface 125 of battery cell 100. Separator 11 may be a film that wraps around housing 120. Separator 11 may be a plate-shaped member (plate) interposed between battery cells 100 adjacent to each other. Separator 11 can be also formed by combining the film or tape with the plate-shaped member. Separator 11 has a protrusion 11A that protrudes to the plate member 310 side with respect to the plurality of battery cells 100. Plate member 310 is provided with a recess 318 that avoids protrusion 11A of separator 11.

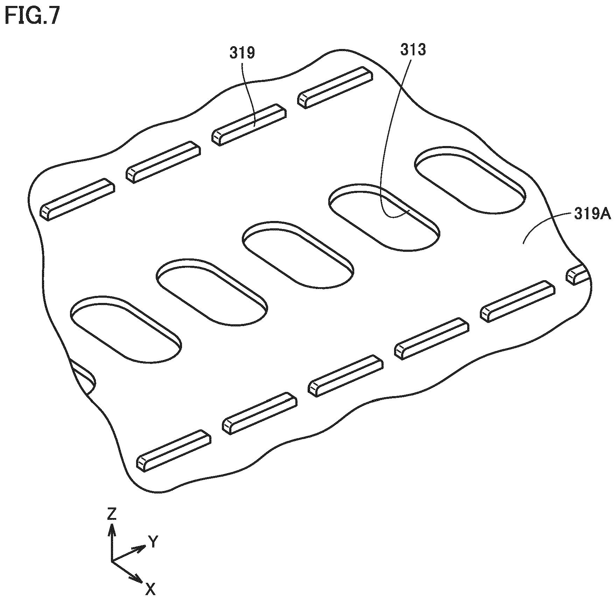

Fig. 7 is a perspective view showing the rear surface of plate member 310. As shown in Fig. 7, plate member 310 has a bottom surface 319A. Bottom surface 319A faces the upper surface of each battery cell 100. Protruding ribs 319 each protruding from bottom surface 319A of plate member 310 toward upper surface 121 of battery cell 100 are provided on portions of bottom surface 319A of plate member 310. Protruding ribs 319 are in abutment with upper surfaces 121 of battery cells 100. In the example of Fig. 7, protruding ribs 319 are intermittently formed on both sides beside through holes 313 so as to extend in the Y axis direction.

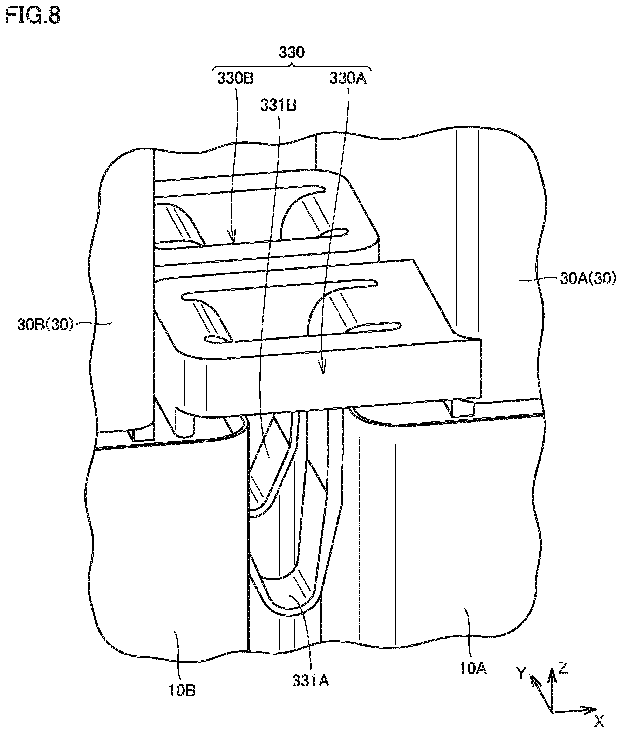

Fig. 8 is a diagram showing a positioning mechanism of bus bar module 30 in the X axis direction. As shown in Fig. 8, bus bar module 30 has a positioning mechanism 330 inserted between two adjacent stacks (stacks 10A, 10B in the example of Fig. 8) to position bus bar module 30 in the X axis direction. In the example of Fig. 8, bus bar module 30A has a positioning mechanism 330A and bus bar module 30B has a positioning mechanism 330B; however, the scope of the present technology is not limited to the configuration in which all the bus bar modules 30 have positioning mechanisms 330, and only part of the plurality of bus bar modules 30 may have positioning mechanism(s) 330.

Positioning mechanism 330A has an insertion portion 331A press-fitted between stacks 10A, 10B. When insertion portion 331A is press-fitted between stacks 10A, 10B, bus bar module 30A is biased in a direction away from stack 10B. On this occasion, insertion portion 331A is brought into abutment with the side surface of stack 10A, thereby positioning bus bar module 30A in the X axis direction.

Positioning mechanism 330B has an insertion portion 331B press-fitted between stacks 10A, 10B. When insertion portion 331B is press-fitted between stacks 10A, 10B, bus bar module 30B is biased in a direction away from stack 10A. On this occasion, insertion portion 331B is brought into abutment with the side surface of stack 10B, thereby positioning bus bar module 30B in the X axis direction.

Since battery pack 1 according to the present embodiment employs the Cell-to-Pack structure in which stack 10 including the plurality of battery cells 100 is directly accommodated in case 20, bus bar module 30 is installed after stack 10 is accommodated in case 20 unlike in the module structure. Therefore, a mechanism different from that in the battery pack having the module structure is required for prevention of incorrect assembling of bus bar module 30.

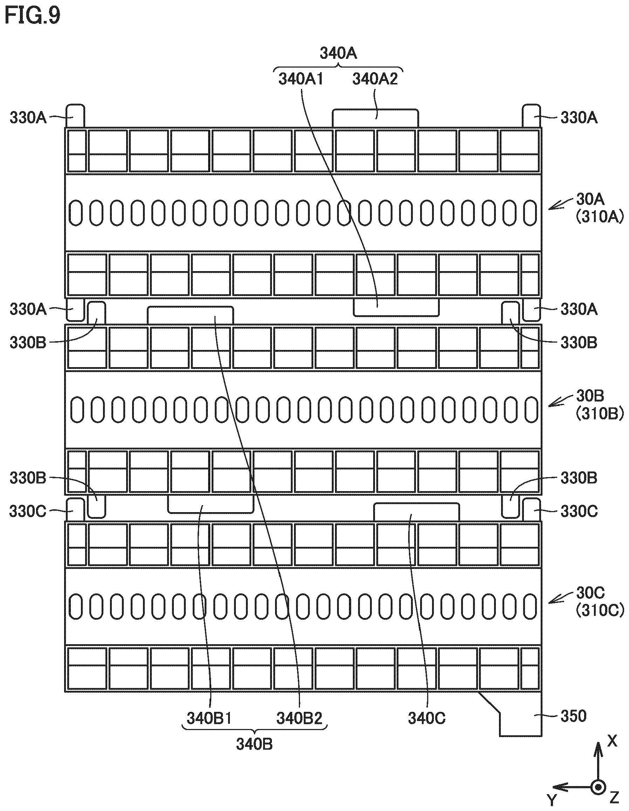

Fig. 9 is a diagram for illustrating an incorrect assembling prevention mechanism of bus bar module 30. In the example shown in Fig. 9, positioning mechanisms 330A, 330B, 330C and protrusions 340A, 340B, 340C are formed in plate members 310A, 310B, 310C of bus bar modules 30A, 30B, 30C, respectively. Positioning mechanisms 330A, 330B, 330C (first protrusions) and protrusions 340A, 340B, 340C (second protrusions) are provided in one piece with plate members 310A, 310B, 310C, and are formed to protrude in the X axis direction from end surfaces 312 of plate members 310, respectively.

Protrusions 340A formed in plate member 310A include a protrusion 340A1 protruding to the plate member 310B side and a protrusion 340A2 protruding opposite to plate member 310B. Protrusions 340B formed in plate member 310B include a protrusion 340B1 protruding to the plate member 310C side and a protrusion 340B2 protruding to the plate member 310A side. Protrusion 340C formed in plate member 310C protrudes to the plate member 310B side.

As shown in Fig. 9, when bus bar modules 30A, 30B, 30C are correctly assembled, positioning mechanisms 330A, 330B, 330C and protrusions 340A, 340B, 340C do not interfere with one another. On the other hand, if an attempt is made to assemble bus bar modules 30A, 30B, 30C incorrectly, positioning mechanisms 330A, 330B, 330C and protrusions 340A, 340B, 340C interfere with one another. Thus, incorrect assembling of bus bar module 30 can be prevented.

Specifically, bus bar module 30C is provided with a collective terminal portion 350, and bus bar module 30C can be assembled only in the correct position and correct direction. Further, since collective terminal portion 350 and an attachment portion thereof serve as a guide, bus bar module 30A or 30B, which is incorrect in type, is prevented from being assembled to a location at which bus bar module 30C should be installed.

When installing bus bar module 30B after bus bar module 30C is correctly assembled, if an attempt is made to assemble plate member 310B in an incorrect installation direction (in a direction rotated by 180°), protrusion 340B2 of plate member 310B interferes with protrusion 340C of plate member 310C.

Further, if an attempt is made to assemble bus bar module 30A to a location at which bus bar module 30B should be installed, protrusion 340A1 of plate member 310A interferes with protrusion 340C of plate member 310C. Further, positioning mechanism 330A provided in plate member 310A interferes with positioning mechanism 330C provided in plate member 310C.

When installing bus bar module 30A after bus bar modules 30C, 30B are correctly assembled, if an attempt is made to install plate member 310A in an incorrect installation direction (in a direction rotated by 180°), protrusion 340B2 of plate member 310B interferes with protrusion 340A2 of plate member 310A.

Further, if an attempt is made to assemble bus bar module 30B to a location at which bus bar module 30A should be installed, protrusions 340B2 of plate members 310B interfere with each other. Further, positioning mechanisms 330B provided in plate members 310B also interfere with each other.

Since bus bar module 30 according to the present embodiment is thus provided with the mechanism that hinders incorrect assembling by interference and that causes no interference when correctly assembled, incorrect assembling of bus bar module 30 can be prevented also in battery pack 1 having the Cell-to-Pack structure. In bus bar module 30 according to the present embodiment, when arranging a plurality of bus bar modules having different shapes in one battery pack, there is only one manner of assembling in which the bus bar modules having different shapes do not interfere with each other.

It should be noted that the arrangement of positioning mechanisms 330A, 330B, 330C and protrusions 340A, 340B, 340C shown in Fig. 9 is merely an example, and the scope of the present technology is not limited thereto.

Further, since battery pack 1 employs the Cell-to-Pack structure, a member such as a binding bar in the module structure cannot be used as a member for positioning bus bar module 30.

In battery pack 1 according to the present embodiment, since positioning mechanism 317 provided in plate member 310 biases side wall 21 of case 20 so as to position bus bar module 30 in the Y axis direction, bus bar module 30 can be precisely positioned in battery pack 1 having the Cell-to-Pack structure without providing a complicated mechanism.

In battery pack 1, protruding ribs 319 protruding from bottom surface 319A of plate member 310 toward battery cells 100 are in abutment with upper surfaces 121 of battery cells 100. Thus, by bringing protruding ribs 319 into abutment with battery cells 100, a contact area between plate member 310 and each of upper surfaces 121 of battery cells 100 can be reduced to reduce frictional resistance when plate member 310 is moved with respect to battery cells 100, with the result that plate member 310 can be positioned smoothly and precisely.

It should be noted that the shapes and arrangements of protruding ribs 319 are not limited to those shown in Fig. 7. Further, in the present technology, each protruding rib 319 is not necessarily an essential configuration.

In battery pack 1, since plate member 310 is provided with recess 318 that avoids protrusion 11A of separator 11, movement of plate member 310 in the Y axis direction is not hindered by protrusion 11A of separator 11 when positioning plate member 310 in the Y axis direction using positioning mechanism 317. Therefore, plate member 310 can be positioned smoothly and precisely.

It should be noted that in the present technology, protrusion 11A of separator 11 and recess 318 of plate member 310 are not necessarily essential configurations.

Battery pack 1 is provided with positioning mechanism 330 that is inserted between stacks 10A, 10B and that positions bus bar modules 30A, 30B in the X axis direction. Therefore, plate member 310 can be positioned in the X axis direction as well as the Y axis direction.

It should be noted that in the present technology, positioning mechanism 330 for the positioning in the X axis direction is not necessarily an essential configuration. Further, all of the plurality of bus bar modules 30A, 30B, 30C may include positioning mechanisms 330, or part of the plurality of bus bar modules 30A, 30B, 30C may include positioning mechanism(s) 330.

According to the present technology, since the bus bar module is provided with the protrusion that hinders incorrect assembling by interference and that causes no interference when correctly assembled, incorrect assembling of the bus bar module can be prevented also in the battery pack having the Cell-to-Pack structure.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery pack (1) comprising:
a first stack (10A) including a plurality of first battery cells (100) arranged side by side in a first direction;
a second stack (10B) that is adjacent to the first stack (10A) in a second direction orthogonal to the first direction and that includes a plurality of second battery cells (100) arranged side by side in the first direction;
a case (20) that has a side wall (21) supporting the first stack (10A) and the second stack (10B) in the first direction and that accommodates the first stack (10A) and the second stack (10B);
a first bus bar module (30A) including a first bus bar (320) that electrically connects the plurality of first battery cells (100) and a first plate member (310A) that accommodates the first bus bar (320), the first bus bar module (30A) being disposed on the first stack (10A); and
a second bus bar module (30B) including a second bus bar (320) that electrically connects the plurality of second battery cells (100) and a second plate member (310B) that accommodates the second bus bar (320), the second bus bar module (30B) being disposed on the second stack (10B), wherein
at least one of the first bus bar module (30A) and the second bus bar module (30B) has a protrusion (330A, 330B, 340A, 340B) that protrudes toward the other of the first bus bar module (30A) and the second bus bar module (30B), the protrusion (330A, 330B, 340A, 340B) hindering incorrect assembling of the first bus bar module (30A) or the second bus bar module (30B) by interference, the protrusion (330A, 330B, 340A, 340B) causing no interference when the first bus bar module (30A) and the second bus bar module (30B) are correctly assembled.

2. The battery pack (1) according to claim 1, wherein the protrusion (330A, 330B, 340A, 340B) includes a positioning mechanism (330A, 330B) that is inserted between the first stack (10A) and the second stack (10B) and that positions the first bus bar module (30A) or the second bus bar module (30B) in the second direction.

3. The battery pack (1) according to claim 2, wherein the positioning mechanism (330A, 330B) is press-fitted between the first stack (10A) and the second stack (10B).

4. The battery pack (1) according to claim 2 or 3, wherein the protrusion (330A, 330B, 340A, 340B) includes a first protrusion (330A, 330B) constituting the positioning mechanism (330A, 330B) and a second protrusion (340A, 340B) formed separately from the first protrusion (330A, 330B).

5. The battery pack (1) according to any one of claims 1 to 4, wherein
each of the first plate member (310A) and the second plate member (310B) has a second positioning mechanism (317) that positions a corresponding one of the first bus bar module (30A) and the second bus bar module (30B) in the first direction by biasing the side wall (21) of the case (20).
